# EUROPÄISCHE PATENTANMELDUNG

(11) **EP 1 226 995 A1**
(43) Veröffentlichungstag der Anmeldung: **31.07.2002**
(21) Anmeldenummer: 01101915.5
(22) Anmeldetag: 27.01.2001
(51) Int. Cl.: B60L 11/18, B60L 11/12

(54) **Thermo-elektrischer Stromerzeuger für ein Fahrzeug**

(71) Anmelder: Ford Global Technologies, Inc., A subsidiary of Ford Motor Company, Dearborn, Michigan 48126 (US)
(72) Erfinder: Busch, Rainer, 52076 Aachen (DE); Kok, Daniel Benjamin, 6343 CA Klimmen (NL)
(74) Vertreter: Drömer, Hans-Carsten, Dipl.-Ing.

(57) **Zusammenfassung**

Zur Stromerzeugung in einem Kraftfahrzeug ist ein thermoelektrischer Stromerzeuger vorgesehen, welcher einen Thermogenerator (1) enthält, dem von einer Wärmequelle (2) Wärmeenergie (Q) zugeführt wird. Um die Ausgangsspannung des Thermogenerators (1) in einem für das Aufladen einer Batterie (4) oder zur direkten Einspeisung in das Bordnetz geeigneten Bereich zu halten, wird die Wärmeproduktionsrate der Wärmequelle (2) und/oder die Kühlleistung einer Kühleinrichtung für den Thermogenerator (1) von einem Regler (5) kontrolliert. Der Regler (5) ist zu diesem Zweck mit einem Temperatursensor (9) verbunden, der am Thermogenerator (1) angebracht ist. Der Regler (5) kann kostengünstiger ausgelegt werden als ein Gleichstromumwandler (3) zwischen der Ausgangsseite des Thermogenerators (1) und der Batterie (4), so daß auf diesen Umwandler verzichtet werden kann.

## Beschreibung

Die Erfindung betrifft einen thermoelektrischen Stromerzeuger für ein Kraftfahrzeug, enthaltend einen Thermogenerator, der thermisch an eine Wärmequelle gekoppelt ist, sowie einen Regler zur Gewährleistung einer definierten Ausgangsspannung des Thermogenerators. Ferner betrifft die Erfindung ein Kraftfahrzeug mit einem elektrischen Antrieb.

Für die in einem Kraftfahrzeug enthaltenen elektrischen Systeme wird eine Quelle zur Versorgung mit elektrischer Energie benötigt. Dies gilt in besonderem Maße für sogenannte Elektroautos, welche von einem Elektromotor angetrieben werden. Zur Zwischenspeicherung der benötigten elektrischen Energie wird in der Regel eine wiederaufladbare Batterie (Akkumulator) vorgesehen, an welche die Stromverbraucher angeschlossen werden können. Da die Speicherkapazität einer derartigen Batterie jedoch begrenzt ist, muss sie zur Gewährleistung eines länger dauernden Betriebes des Kraftfahrzeugs von Zeit zu Zeit oder kontinuierlich aufgeladen werden. Diese Kraftfahrzeuge sind allgemein unter dem Namen Hybridfahrzeug bekannt.

Hierzu ist es bekannt, in einem Kraftfahrzeug einen thermoelektrischen Stromerzeuger einzusetzen, dessen Thermogenerator unter Ausnutzung einer Temperaturdifferenz aus Wärmeenergie eine elektrische Spannung erzeugen kann. Mit dieser elektrischen Spannung können dann elektrische Verbraucher direkt betrieben und/odereine Speicherbatterie geladen werden. Die Umwandlung einer Temperaturdifferenz in eine elektrische Spannung beruht dabei in bekannter Weise auf dem Seebeck-, dem thermo-ionischen- und dem thermo-photovoltaischen-Effekt, gemäß dem die Kontaktspannung zwischen zwei verschiedenen Materialien (insbesondere Metallen) temperaturabhängig ist. Um eine ausreichende elektrische Leistung sicherzustellen, wird der Thermogenerator typischerweise mit einer aktiven Wärmequelle wie einer Kraftstoffbrennzelle oder einem kontrollierten Wärmetauscher verbunden. Weiterhin wird der Thermogenerator vorzugsweise mit einer Kühlung (Wärmesenke) gekoppelt.

Die Ausgangsspannung eines derartigen Thermogenerators hängt stark von der vorherrschenden Temperaturdifferenz ab. Da andererseits die elektrischen Systeme wie z.B. die aufzuladende Batterie möglichst definierte Spannungsverhältnisse benötigen, wird bei bekannten Systemen ein elektronisch kontrollierter Gleichstromwandler (DC/DC-Wandler) eingesetzt, welcher die schwankenden Ausgangsspannungen des Thermogenerators in Spannungen aus einem nutzbaren definierten Bereich umsetzt. Ein derartiger Konverter hat allerdings den Nachteil, dass er verhältnismäßig aufwendig und damit teuer ist. Außerdem ist der Wirkungsgrad eines DC/DC-Wändlers nicht optimal, so daß unnötige Leistungsverluste entstehen.

Vor diesem Hintergrund war es Aufgabe der vorliegenden Erfindung, einen thermoelektrischen Stromerzeuger für ein Kraftfahrzeug oder dergleichen bereitzustellen, welcher kostengünstiger herstellbar ist. Der Stromerzeuger soll dabei insbesondere für ein Kraftfahrzeug mit einem elektrischen Antrieb, das heißt mit einem hohen Stromverbrauch, geeignet sein, aber auch zur Bordnetzunterstützung in konventionellen Kraftfahrzeugen.

Diese Aufgabe wird durch einen thermoelektrischen Stromerzeuger mit den Merkmalen des Anspruchs 1 sowie ein Kraftfahrzeug mit den Merkmalen des Anspruchs 6 gelöst. Vorteilhafte Ausgestaltungen sind in den Unteransprüchen enthalten.

Der thermoelektrische Stromerzeuger für ein Kraftfahrzeug enthält demnach einen Thermogenerator, welcher in bekannter Weise eine Temperaturdifferenz in eine elektrische Spannung umwandeln kann und der an eine Wärmequelle zu koppeln ist, welche primär die umzuwandelnde Energie bereitstellt. Weiterhin enthält der Stromerzeuger einen Regler zur Gewährleistung einer definierten Ausgangsspannung, das heißt einer Ausgangsspannung, die einen vorgegebenen gewünschten Wert aufweist oder in einem vorgegebenen gewünschten Intervall liegt. Dieser Regler ist so eingerichtet und so mit entsprechenden Betriebsmitteln verbunden, dass er die Temperaturverhältnisse am Thermogenerator in einem Bereich hält, welcher die Erzeugung einer Ausgangsspannung mit den gewünschten definierten Werten sicherstellt.

Anders als bei bekannten thermoelektrischen Stromerzeugern wird die gewünschte Ausgangsspannung demnach nicht durch einen Gleichstromwandler sichergestellt, welcher die variable Ausgangsspannung des Stromerzeugers elektrisch beziehungsweise elektronisch an den gewünschten Wertebereich anpasst. Vielmehr wird die Tatsache ausgenutzt, dass zwischen den Temperaturverhältnissen am Thermogenerator und der vom Thermogenerator erzeugten Ausgangsspannung eine gesetzmäßige Beziehung besteht, so dass die Ausgangsspannung auch durch eine Kontrolle der Temperaturverhältnisse reguliert werden kann. Dabei wird der Vorteil erzielt, dass sich die Regelung der Temperaturverhältnisse am Thermogenerator einfacher und mit kostengünstigeren Mitteln erzielen lässt als die elektrische beziehungsweise elektronische Umwandlung der Ausgangsspannung.

Der Regler für die Temperaturverhältnisse am Thermogenerator ist vorzugsweise mit mindestens einem Temperatursensor verbunden, welcher eine Information über die am Thermogenerator herrschenden Temperaturen liefert. Vorzugsweise ist dieser Temperatursensor an der Wärmequelle oder am Thermogenerator angeordnet. Besonders bevorzugt ist es, wenn am Thermogenerator zwei Temperatursensoren angeordnet sind, welche die für die Spannungserzeugung relevante niedrigste bzw. höchste Temperatur erfassen. Die gemessene Temperatur kann vom Regler als Regelgröße verwendet werden, welche auf einem vorgegebenen Wert beziehungsweise in einem vorgegebenen Wertebereich gehalten werden soll. Alternativ oder ergänzend können auch andere Regelgrößen verwendet werden, zum Beispiel unmittelbar die vom Thermogenerator erzeugte Ausgangsspannung.

Gemäß einer bevorzugten Ausgestaltung der Erfindung ist der Regler für den Thermogenerator mit der Wärmequelle so verbunden, dass er deren Wärmeproduktion beeinflussen kann. Wenn es sich bei der Wärmequelle zum Beispiel um eine Kraftstoffbrennzelle handelt, kann die Wärmeproduktionsrate vom Regler über eine Veränderung der Kraftstoffzufuhr verändert werden. Die Wärmeproduktionsrate kann somit vom Regler als Stellgröße verwendet werden.

Gemäß einer anderen Ausgestaltung der Erfindung kann der Regler alternativ oder zusätzlich mit einer Kühleinrichtung für den Thermogenerator verbunden sein, so dass er die Kühlleistung dieser Kühleinrichtung beeinflussen kann. In diesem Fall wird die Kühlleistung beziehungsweise Wärmeabfuhrrate am Thermogenerator vom Regler als Stellgröße verwendet.

Vorzugsweise verwendet der Regler die Kühlleistung einer Kühleinrichtung sowie die Wärmeproduktionsrate der Wärmequelle gleichzeitig als Stellgrößen, um die Temperaturverhältnisse im Thermogenerator in der gewünschten Weise zu beeinflussen. Die Ausnutzung beider Einflussmöglichkeiten hat den Vorteil, dass ein größerer Bereich von Einsatzbedingungen ausgenutzt werden kann und dass die Stromerzeugung mit einer besseren Effizienz ausgeführt werden kann.

Der thermoelektrische Stromerzeuger ist ausgangsseitig vorzugsweise mit einem Speicher für die erzeugte elektrische Energie verbunden. Bei dem Speicher kann es sich insbesondere um eine wiederaufladbare Batterie (Akkumulator) handeln. Dies hat den Vorteil, dass die thermoelektrische Stromerzeugung unabhängig vom aktuellen Stromverbrauch des Kraftfahrzeugs kontinuierlich in einem jeweils optimalen Bereich stattfinden kann.

Die Erfindung betrifft ferner ein Kraftfahrzeug mit einem elektrischen Antrieb, das heißt mit einem Elektromotor, welcher unmittelbar die Räder des Kraftfahrzeugs antreiben kann. Der Elektromotor kann dabei als alleiniger Antrieb des Kraftfahrzeugs vorgesehen sein (Elektroauto) oder in einem Hybridfahrzeug zusammen mit einem Verbrennungsmotor zum Einsatz kommen. Ein Kraftfahrzeug mit einem elektrischen Antrieb hat einen hohen Stromverbrauch, welcher insbesondere durch einen thermoelektrischen Stromerzeuger befriedigt werden kann. Dabei wird der Stromerzeuger vorteilhafterweise in einer der oben erläuterten Arten ausgestaltet.

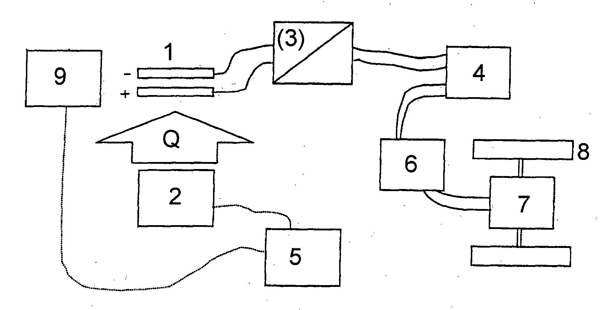

Im Folgenden wird die Erfindung mit Hilfe der Figur beispielhaft erläutert.

Die einzige Figur zeigt schematisch die für die vorliegende Erfindung wesentlichen Komponenten eines Kraftfahrzeugs. Das Kraftfahrzeug besitzt einen elektrischen Antrieb in Form eines Elektromotors 7, welcher - gegebenenfalls über ein oder mehrere zwischengeschaltete Getriebe - die Räder 8 einer Achse des Kraftfahrzeugs antreibt. Der Elektromotor 7 wird von einer Leistungselektronik 6 mit Energie versorgt und gesteuert. Die Leistungselektronik 6 entnimmt die benötigte Energie ihrerseits einem wiederaufladbaren Speicher 4, bei dem es sich typischerweise um eine Batterie oder einen Superkondensator handelt.

Um auch während längerer Fahrten eine ausreichende Energiemenge in der Batterie 4 sicherzustellen, ist in dem Kraftfahrzeug ein thermoelektrischer Stromerzeuger vorgesehen. Dieser besteht im Wesentlichen aus einem Thermogenerator 1, welcher bei Vorhandensein einer Temperaturdifferenz Wärme direkt in elektrischen Strom umwandeln kann. Die umzuwandelnde Wärmeenergie wird dabei von einer Wärmequelle 2 erzeugt, die thermisch mit dem Thermogenerator 1 gekoppelt ist (s. Pfeil für die Richtung des Wärmeflusses Q). Bei der Wärmequelle 2 kann es sich zum Beispiel um eine Kraftstoffbrennzelle oder einen kontrollierbaren Wärmetauscher handeln.

Sowohl die erzeugte Leerlaufspannung als auch die Umwandlungseffizienz des Thermogenerators 1 hängen von den Betriebstemperaturen des Thermogenerators ab. Um den Thermogenerator 1 zusammen mit einem Energiespeicher 4 oder einem Antriebssystem 6, 7,8 verwenden zu können, muss die Ausgangs-Gleichspannung des Thermogenerators in einen nutzbaren Bereich gebracht werden. Hierzu kann insbesondere ein zwischen dem Ausgang des Thermogenerators 1 und dem Verbraucher bzw. der Batterie 4 angeordneter Gleichstromwandler 3 dienen, der elektronisch geregelt wird. Ein derartiger Wandler ist jedoch verhältnismäßig teuer und hat Leistungsverluste.

Erfindungsgemäß wird daher vorgeschlagen, den in der Figur dargestellten Umwandler 3 wegzulassen (beziehungsweise sehr einfach und kostengünstig auszulegen) und statt dessen eine günstigere Art der Regelung der Ausgangsspannung des Thermogenerators 1 vorzusehen.

Diese erfindungsgemäße Regelung des Thermogenerators 1 erfolgt über den Regler 5, welcher die Temperatur auf der heißen Seite, der kühlen Seite oder auf beiden Seiten des Thermogenerators beeinflusst. Zu diesem Zweck ist der Regler 5 mit mindestens einem Temperatursensor 9 verbunden, welcher eine relevante Temperatur im Thermogenerator 1 mißt. Vorzugsweise messen zwei Temperatursensoren das hohe und das niedrige Temperaturniveau im Thermogenerator 1.

Für die Beeinflussung der Temperatur im Thermogenerator 1 stehen dem Regler 5 verschiedene Möglichkeiten zur Verfügung. Bei der in der Figur dargestellten Variante nimmt der Regler 5 Einfluss auf die Wärmeproduktionsrate in der Wärmequelle 2. Wenn die Wärmequelle 2 zum Beispiel eine Kraftstoffbrennzelle ist, kann der Regler 5 die Kraftstoffzufuhr zum Brenner regulieren, um hierüber die Wärmeproduktion und damit die Temperatur im Thermogenerator 1 zu beeinflussen.
Alternativ oder auch zusätzlich kann der Regler 5 Einfluss auf die Temperatur der kühlen Seite des Thermogenerators 1 nehmen. Wenn die kühle Seite zum Beispiel mit Wasser gekühlt wird, könnte der Regler 5 die Temperatur und/oder die Zufuhrrate des Kühlwassers beeinflussen.

Die Möglichkeit, auf den Gleichstromumwandler 3 verzichten und die gewünschten Ausgangsspannungen dennoch sicherstellen zu können, erlaubt eine wesentlich kostengünstigere Auslegung der Stromerzeugung in dem Kraftfahrzeug. Dies gilt um so mehr, als eine Grundregelung für die Wärmeerzeugung in der Wärmequelle 2 und/oder für die Kühlung des Thermogenerators 1 oft bereits ohnehin vorgesehen ist, so dass im Wesentlichen nur andere, von den Temperaturverhältnissen im Thermogenerator 1 abhängige Zielvorgaben für diese Regler vorgegeben werden müssen.

## Patentansprüche

1. Thermoelektrischer Stromerzeuger für ein Kraftfahrzeug, enthaltend einen Thermogenerator (1), der thermisch an eine Wärmequelle (2) gekoppelt werden kann, sowie einen Regler zur Gewährleistung einer definierten Ausgangsspannung des Thermogenerators,
**dadurch gekennzeichnet, daß** der Regler (5) so eingerichtet ist, dass er die Temperaturverhältnisse am Thermogenerator (1) in einem die definierte Ausgangsspannung erzeugenden Bereich hält.

2. Thermoelektrischer Stromerzeuger nach Anspruch 1,
**dadurch gekennzeichnet, daß** der Regler (5) mit mindestens einem an der Wärmequelle (2) und/oder an dem Thermogenerator (1) angeordneten Temperatursensor (9) verbunden ist.

3. Thermoelektrischer Stromerzeuger nach Anspruch 1,
**dadurch gekennzeichnet, daß** der Regler (5) mit mindestens einem an der Wärmequelle (2) und/oder an dem Thermogenerator (1) angeordneten Spannungsensor (9a) verbunden ist.

4. Thermoelektrischer Stromerzeuger nach mindestens einem der Ansprüche 1,2 oder 3,
**dadurch gekennzeichnet, daß** der Regler (5) mit der Wärmequelle (2) so verbunden ist, dass er deren Wärmeproduktion beeinflussen kann.

5. Thermoelektrischer Stromerzeuger nach mindestens einem der Ansprüche 1 bis 4,
**dadurch gekennzeichnet, daß** der Regler (5) mit einer Kühleinrichtung für den Thermogenerator (1) so verbunden ist, dass er dessen Kühlleistung beeinflussen kann.

6. Thermoelektrischer Stromerzeuger nach mindestens einem der Ansprüche 1 bis 5,
**dadurch gekennzeichnet, daß** der Thermogenerator (1) ausgangsseitig mit einem Speicher (4) für die erzeugte elektrische Energie verbunden ist.

7. Thermoelektrischer Stromerzeuger nach mindestens einem der Ansprüche 1 bis 5,
**dadurch gekennzeichnet, daß** der Thermogenerator (1) ausgangsseitig mit dem Bordnetz verbunden ist.

8. Kraftfahrzeug,
**dadurch gekennzeichnet, daß** es einen thermoelektrischen Stromerzeuger nach mindestens einem der Ansprüche 1 bis 7 enthält.
